## Europäisches Patentamt
## European Patent Office
## Office européen des brevets

(19)

(11) Numéro de publication: **O 003 928**
**B1**

(12)

# FASCICULE DE BREVET EUROPEEN

(45) Date de publication du fascicule du brevet: **16.03.83**

(51) Int. Cl.³: **G 02 C 5/22**

(21) Numéro de dépôt: **79400087.7**

(22) Date de dépôt: **09.02.79**

(54) **Charnière à ressort pour monture de lunettes.**

(30) Priorité: **24.02.78 FR 7806553**

(43) Date de publication de la demande:
**05.09.79 Bulletin 79/18**

(45) Mention de la délivrance du brevet:
**16.03.83 Bulletin 83/11**

(84) Etats contractants désignés:
**DE FR GB IT NL**

(56) Documents cités:
**FR - A - 1 511 263**
**FR - A - 2 161 470**
**US - A - 4 005 930**

(73) Titulaire: **Etablissements Auguste LAMY & FILS
216, rue de la République
F-39400 Morez (FR)**

(72) Inventeur: **Malfroy, René
F-39400 La Mouille / Morez (FR)**

(74) Mandataire: **Silhol, Christian Maurice Alfred
c/o BUGNION ASSOCIES S.à.r.l. Conseils en
Propriété Industrielle 4, rue de Haguenau
F-67000 Strasbourg (FR)**

Courier Press, Leamington Spa, England.

Charnière à ressort pour monture de lunettes

L'invention concerne une charnière à ressort pour monture de lunettes comportant un charnon femelle fixé sur la partie de la monture supportant les verres, les autres composants de la charnière étant portés par une branche mobile.

La demande de brevet FR 2.275.791 décrit une charnière dont la partie fixée sur la branche comporte une voie de guidage dans laquelle coulisse le support du charnon, le mouvement dudit support étant limité par un ressport dont la tension est aussrée par une vis introduite dans une douille fixée sur la branche.

Le brevet US—A—4.005.930 (ANDRE GUENIN) décrit une charnière comprenant un charnon mâle prolongé par une pièce partiellement filetée coulissant dans un boîtier comportant un alésage parallèle à la branche sur laquelle il est fixé. Cette pièce est pourvue de moyens de rappel élastique et de limitation de sa course.

Ces charnières connues sont composées de pièces difficiles à usiner, coûteuses et fragiles. Elles ne sont pas réglables facilement.

Le but de l'invention est de réaliser une charnière à ressort composée d'un nombre réduit de pièces simples.

A cette fin la charnière selon l'invention comporte un charnon mâle prolongé par une pièce, partiellement filetée, coulissant dans un boîtier comportant un alésage parallèle à la branche de la monture sur laquelle il est fixé, cette pièce est pourvue de moyens de rappel élastique et de limitation de sa course. Elle est caractérisée par le fait que la pièce coulissante est une tige cylindrique comportant au moins deux parties concentriques de diamètres différents séparées par un congé, une des extrémités de ladite tige constituant le charnon ou étant façonnée en carré de façon qu'elle puisse tenir dans une ébauche constituant le charnon mâle, l'autre extrémité étant filetée et par le fait que l'alésage du boîtier comporte deux parties concentriques séparées par une portée complémentaire du congé, le diamètre de l'une des parties de l'alésage étant supérieur à celui de la partie de la tige ayant le plus petit diamètre, le diamètre de l'autre partie de l'alésage étant supérieur au diamètre extérieur commun à une rondelle, un ressort et un écrou cylindrique.

Les principaux avantages résident dans le fait que le charnon mâle constitue la pièce maîtresse de la charnière, sa tige peut facilement coulisser dans l'alésage du boîtier réalisé par un perçage adéquat.

Ces deux pièces sont fabriquées sans ajustage compliqué et le coût de leur fabrication est inférieur à celui des pièces plus complexes, tout en présentant une solidité et une efficacité excellentes.

D'autres avantage ressortiront de la description qui va suivre d'une forme d'exécution, préférentielle mais non limitative, donnée à titre d'exemple, et du dessin dans lequel:

la figure 1 est une vue éclatée des composants de la charnière portés par une branche mobile;

la figure 2 est une vue à plat du charnon mâle;

la figure 2a est une coupe selon II—II de la figure 2;

la figure 3 est une vue de côté de la tige du charnon;

la figure 4 est une coupe et une vue frontale de l'écrou;

les figures 5 et 5a sont une vue de côté et une vue de dessus du boîtier.

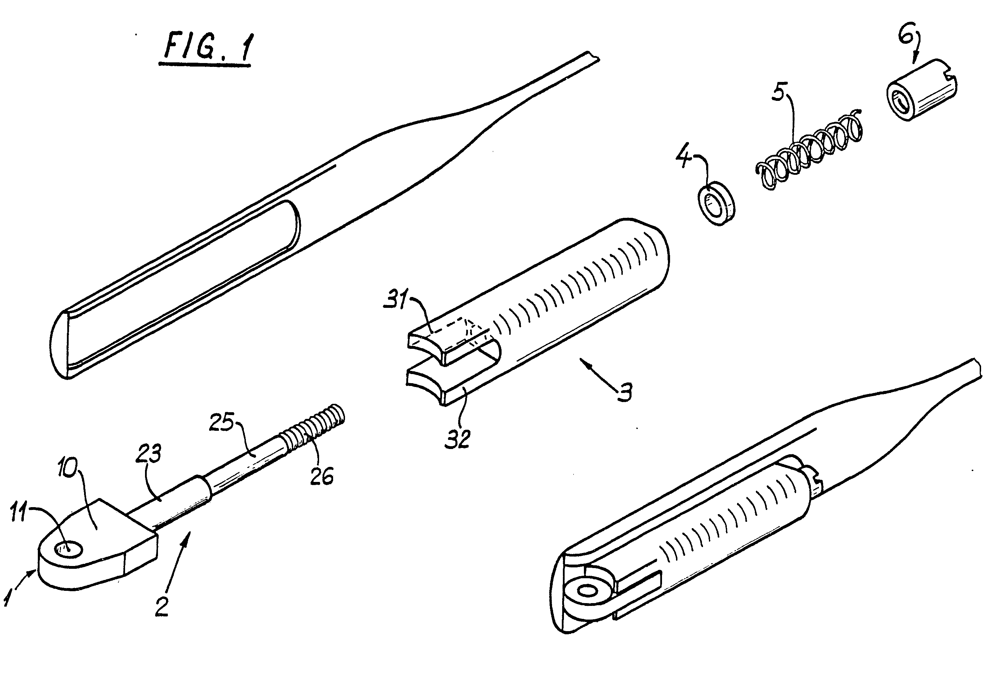

La figure 1 représente une vue éclatée des composants de la charnière qui sont fixés sur une branche mobile des lunettes.

Il s'agit essentiellement:

— d'un charnon mâle 1 prolongé par une tige 2 partiellement filetée,
— d'un boîtier 3 formant capot et comportant un alésage parallèle à la branche sur laquelle il est fixé, alésage dans lequel coulisse la tige 2 du charnon 1,
— d'une rondelle 4,
— d'un ressort 5,
— d'un écrou 6.

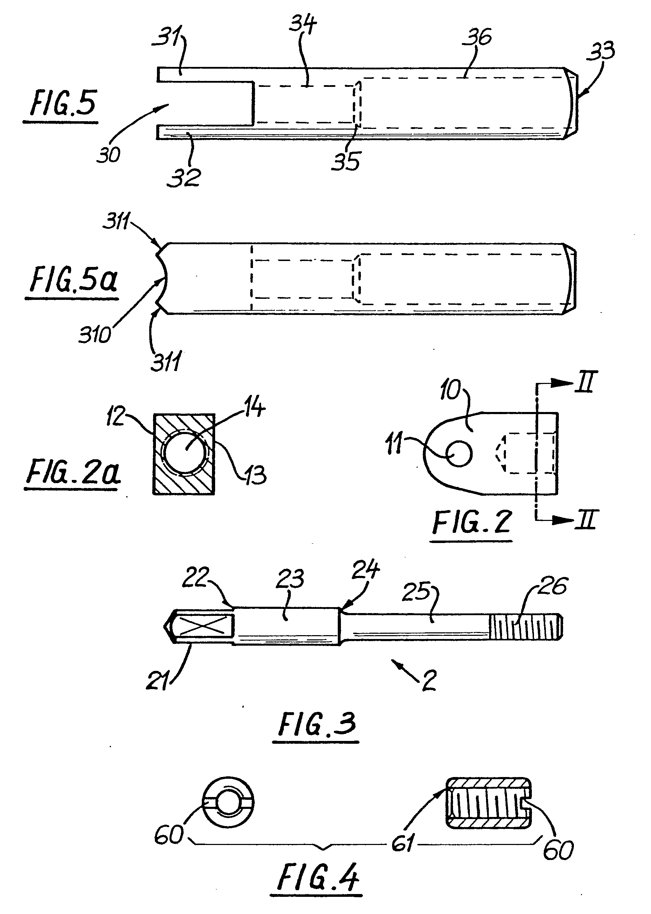

Les figures 2 et 2a représentent le charnon mâle, constitué par une ébauche 10 percée d'un trou 11 pour le passage de la broche qui relie les deux charnons.

Entre les faces planes 12, 13 de l'ébauche qui sont perpendiculaires à la broche, un orifice 14 reçoit une extrémité 21 d'une tige 2 prolongeant le charnon.

Cette extrémité 21 est façonnée en carré de façon que la tige 2 puisse tenir dans l'ébauche 10 par enfoncement et soudure. Toute autre moyen connu peut être employé pour fixer la tige sur l'ébauche y compris la fabrication en une seule pièce de cet ensemble.

La figure 3 représente une coupe longitudinale de la tige 2 du charnon mâle. Cette tige est cylindrique, elle comporte plusieurs parties dont les diamètres sont différents.

Une partie 21 mentionnée ci-dessus délimitée par un épaulement 22, une partie 23 dont le diamètre correspond à la partie de l'alésage dans laquelle elle coulisse et qui est délimitée d'un côté par l'épaulement 22 et de l'autre par un congé 24, chanfreiné pour éviter qu'il porte cassure. Vient à la suite, une partie 25 sur laquelle seront enfilés la rondelle 4 et le ressort 5, dont le diamètre est inférieur à la partie de l'alésage dans laquelle coulisse ladite partie 25, puis une partie 26 filetée au pas de l'écrou 6.

La figure 4 représente une coupe de l'écrou 6 cylindrique, coulissant dans l'alésage, muni d'une fente 60 qui permet de régler la tension du ressort 5 enfilé sur la partie 24 de la tige 2 et comprimé entre la rondelle 4 et la face 61 de l'écrou 6.

Les figures 5 et 5a représentent deux vues du boîtier 3 comportant, à l'une de ses extrémités, une échancrure 30 les branches 31, 32 ont un écartement sensiblement correspondant à l'épaisseur de l'ébauche 10 entre ses deux faces planes 12, 13, à l'extrémité opposée, un orifice 33 par lequel affleure l'écrou 6. Un alésage traverse ce boîtier de part en part. Il est composé d'une partie 34 délimitée par l'échancrure 30 et une portée 35, complémentaire du congé 24, partie dans laquelle coulisse la partie 23 de la tige 2, les diamètres de ces parties étant correspondants.

Une seconde partie 36 concentrique prolonge la partie 34 entre la portée 35 et l'orifice 33.

Afin de mieux guider la rotation de la charnière, les branches 31 et 32 du boîtier sont pourvues symétriquement d'un arrondi (Figure 5a) et de pans coupés 311 enserrant le charnon femelle.

## Revendications

1. Charnière à ressort pour monture de lunettes comportant un charnon mâle (1) prolongé par une pièce (2) partiellement filetée coulissant dans un boîtier (3) comportant un alésage parallèle à la branche de la monture sur laquelle il est fixé ladite pièce étant pourvue de moyens de rappel élastique (5) et de limitation de sa course, caractérisée par le fait que la pièce coulissante est une tige (2) cylindrique comportant au moins deux parties concentriques (23, 25) de diamètres différents séparées par un congé (24), une des extrémités de ladite tige constituant le charnon mâle (1) ou étant façonnée en carré (21) de façon qu'elle puisse tenir dans une ébauche (10) constituant le charnon mâle (1), l'autre extrémité (26) étant filetée et par le fait que l'alésage du boîtier comporte deux parties (34, 36) concentriques séparées par une portée (35) complémentaire du congé (24), le diamètre de l'une (34) des parties de l'alésage etant supérieur à celui de la partie (23) de la tige (2) ayant le plus petit diamètre et celui de l'autre partie (36) de l'alésage étant supérieur au diamètre extérieur commun à une rondelle (4), un ressort (5) et une écrou (6) cylindrique.

2. Charnière à ressort selon la revendication 1, caractérisée par le fait que les moyens de rappel sont réglables et constitués par la rondelle (4) puis le ressort (5) enfilés sur la partie (25) de la tige (2) ayant le plus petit diamètre maintenus par l'écrou (6), coulissant dans l'alésage du boîtier (3), muni d'une fente (60) qui permet de régler la tension du ressort comprimé entre la rondelle (4) et la face (61) de l'écrou, et par le fait que la longueur de la tige (2) est suffisante pour que la fente (60) affleure à l'extérieur du boîtier.

3. Charnière à ressort selon la revendication 2, caractérisée par le fait que les branches (31) et (32) du boîtier (3) sont pourvues symétriquement d'un arrondi (310), et par le fait que le ressort (5) exerce une pression constante sur la partie opposée et complémentaire du charnon femelle afin d'empêcher le jeu de la charnière au point d'articulation des branches de lunettes.

## Patentansprüche

1. Federscharnier für Brillengestelle, dessen einer Scharnierteil (1) mittels eines teilweise mit einem Aussengewinde versehenen Zapfens (2) in einem Gehäuse (3) mit einer Bohrung parallel zu dem das Gehäuse tragenden Gestellbügel verschiebbar und mit einer Rückholeinrichtung (5) sowie einer Verschiebungsbegrenzung versehen ist, dadurch gekennzeichnet, dass der verschiebbare Zapfen ein zylindrischer Bolzen (2) mit wenigstens zwei konzentrischen, durch eine Kehle (24) getrennten Abschnitten (23, 25) verschiedener Durchmesser ist, wovon das eine Ende die Scharnierlasche (1) bildet oder so quadratisch (21) ausgebildet ist, dass es in einem Scharnierlaschenformstück (10) gehalten werden kann, während das andere Bolzenende (26) mit dem Aussengewinde versehen ist, dass ferner die Gehäusebohrung zwei konzentrische, durch einen der Bolzenkehle (24) entsprechenden Absatz (35) getrennte Abschnitte (34, 36) aufweist, wovon der Durchmesser des einen Bohrungsabschnittes (34) grösser ist als derjenige des einen Abschnittes (23) des Bolzens (2) mit kleinstem Durchmesser und der Durchmesser des anderen Bohrungsabschnittes (36) grösser ist als der gemeinsame Aussendurchmesser einer Ringscheibe (4), einer Feder (5) und einer zylindrischen Mutter (6).

2. Federscharnier nach Anspruch 1, dadurch gekennzeichnet, dass die Rückholeinrichtung verstellbar ist und aus der Ringscheibe (4) sowie aus der auf dem Abschnitt (25) des Bolzens (2) mit kleinstem Durchmesser sitzenden Feder (5) und der diese Feder haltenden Mutter (6) besteht, welche in der Bohrung des Gehäuses (3) verschiebbar und mit einem Schlitz (60) versehen ist, womit die Verstellung der Spannung der zwischen der Ringscheibe (4) und der Stirnfläche (61) der Mutter zusammengedrückten Feder möglich ist, und dass die Länge des Bolzens (2) ausreichend ist, damit der Schlitz (60) in gleicher Ebene wie das Gehäuseäussere liegt.

3. Federscharnier nach Anspruch 2, dadurch gekennzeichnet, dass die Schenkel (31, 32) des Gehäuses (3) symmetrische mit einer Abrundung (310) versehen sind und dass die Feder (5) einen Konstanten Druck auf den anderen gegenüberliegenden und entsprechenden Scharnierteil ausübt, um ein Spiel des Scharniers am Schwenkpunkt der Brillenbügel zu verhindern.

## Claims

1. Spring-loaded hinge for spectacle frame comprising a male hinge pin (1) having a partially screw-threaded extension (2) adapted to slide in a socket (3) formed with a bore parallel to the spectacle frame side to which said socket is to be fastened, said extension comprising resilient return means (5) adapted to limit its permissible stroke, characterized in that said sliding extension is a cylindrical rod (2) consisting of at least two concentric sections (23, 25) of different diameters separated by a small surved convex moulding (24), one end of said rod constituting the male hinge pin (1) or having a substantially square configuration (21) so that it can fit in a blank (10) constituting said male hinge pin (1), the opposite end (26) of said rod (2) being screw-threaded, and by the fact that the socket bore comprises two sections (34, 36) separated by a bearing portion (35) matching said moulding (24), the diameter of one (34) of said two sections of said socket bore being greater than that of the section (23) of rod (2) having the minor diameter and that of the other section (36) being greater than the outer diameter of a washer (4), a coil spring (5) and a cylindrical nut (6).

2. The spring-loaded hinge for spectacle frame according to claim 1, characterized in that said return means are adjustable and consist of said washer (4) followed by said coil spring (5) slipped on the plain section (25) of smaller diameter of said rod (2) retained by said nut (6) sliding freely in the bore of said socket (3) formed with a diametral slot (60) whereby the force of the spring compressed between said washer (4) and the adjacent end face (61) of said nut (6) can be adjusted, inasmuch as the length of said rod (2) is sufficient to cause said diametral slot (60) to be flush with the corresponding end face of said socket (3).

3. The spring loaded hinge for spectacle frame according to claim 2, characterized in that a pair parallel arms (31, 32) of the socket (3) have convex curved end faces (310), and that said spring (5) exerts a constant pressure on the opposite complementary portion of the female hinge socket (3) to absorb any hinge play at its pivotal connection with the relevant spectacle side.

*FIG. 1*

0003928

_FIG.5_

_FIG.5a_

_FIG.2a_

_FIG.2_

_FIG.3_

_FIG.4_